# FASCICULE DE BREVET EUROPEEN

(11) **EP 0 549 495 B1**
(45) Date de publication et mention de la délivrance du brevet: **05.03.1997**
(21) Numéro de dépôt: 92420477.9
(22) Date de dépôt: 21.12.1992
(51) Int. Cl.: G01J 5/04, G01N 1/28

(54) **Appareil de mesure de la temperature d'un échantillon placé dans un récipient d'un appareil d'application de micro-ondes**
Gerät zur Messung der Temperatur eines in einem Gefäss eines Mikrowellenbehandlungsgerät angebrachten Gegenstandes
Apparatus for measuring the temperature of an object located in a container of an apperatus for applying microwaves

(30) Priorité: 23.12.1991 FR 9116286
(43) Date de publication de la demande: 30.06.1993
(73) Titulaire: SOCIETE PROLABO, 94120 Fontenay-sous-Bois (FR)
(72) Inventeur: Jacquault, Patrick, F-92310 Sèvres (FR)
(74) Mandataire: Schrimpf, Robert

(56) Documents cités:
- GB-A- 2 062 428
- US-A- 4 191 876
- US-A- 4 681 740
- US-A- 4 693 867
- US-A- 5 059 400

## Description

La présente invention concerne la mesure de la température d'un échantillon placé dans un récipient d'un appareil d'application de micro-ondes comportant des moyens pour émettre des micro-ondes dans une cavité d'application, le récipient étant placé dans la cavité d'application.

Elle concerne plus particulièrement un appareil d'application de micro-ondes sur au moins un échantillon dont la température, au cours de l'application des micro-ondes, est mesurée par des moyens de mesure de la température.

Un appareil d'application de micro-ondes est destiné à soumettre un échantillon à des micro-ondes. Un tel appareil comporte des moyens pour émettre des micro-ondes dans une cavité d'application dans laquelle est introduit le récipient contenant l'échantillon. De tels appareils sont par exemple décrits dans les brevets européens délivrés sous les numéros 0 155 893, 0 156 742, la demande de brevet européen publiée sous le numéro 0 387 161 et le brevet américain US-5059400 de la société Prolabo.

L'échantillon placé dans le récipient est soumis aux micro-ondes pour effectuer un chauffage rapide de celui-ci, par exemple pour réaliser une réaction chimique ou une opération physique en milieu humide sur l'échantillon.

A titre d'exemples, dans un tel appareil on peut réaliser des réactions chimiques telles que minéralisation, décomposition, hydrolyse ..... ou des opérations physiques telles que dissolution, cristallisation, évaporation, fusion .....

Selon la réaction chimique et/ou l'opération physique effectuée le récipient, placé dans la cavité d'application de micro-ondes peut contenir un produit ou un mélange de produits et éventuellement un ou plusieurs réactifs. Par commodité dans le présent texte on appellera "échantillon" le contenu du récipient.

Pour mesurer la température d'un échantillon contenu dans un récipient soumis à un chauffage, on utilise en général, une sonde plongeant dans le récipient au sein de l'échantillon. De telles sondes, qui sont métalliques et reliées par des fils conducteurs à un dispositif de lecture, ne peuvent pas être utilisées pour mesurer la température d'un échantillon contenu dans un récipient placé dans une cavité d'application de micro-ondes. En effet, de telles sondes métalliques et leurs fils de connexion jouent le rôle d'antenne et émettent donc des micro-ondes hors de la cavité d'application, ce qui présente un danger certain.

Pour éviter le phénomène d'antenne, on a alors envisagé de mesurer la température au moyen de sondes, plongeant dans l'échantillon, constituées de fibres optiques conduisant le rayonnement à un pyromètre optique. Cette méthode de mesure peut paraître séduisante mais est très limitée et ne permet pas de suivre l'évolution de la température d'un échantillon en continu, par exemple de la température ambiante jusqu'à 500 °C ou 600 °C, En effet, une sonde constituée de fibres optiques ne permet la mesure que dans une plage de température bien définie, ce qui ne permet pas de suivre en continu l'évolution de la température d'un échantillon par exemple de 20 °C à 500 °C cela imposant plusieurs changements de la sonde de mesure.

En outre, lors de la réalisation de réactions chimiques en milieu humide, telles que les minéralisations, le milieu réactionnel est très corrosif ce qui nuit à la fiabilité de la mesure et à la durée de vie des fibres optiques.

Enfin, on connaît du document GB-2062428 un four micro-ondes qui comprend des moyens de détection infrarouge, disposés au-dessus d'une membrane transparente au rayonnement infrarouge, placée dans la paroi supérieure du four. Selon ce document, l'aliment à chauffer est situé au centre de la cavité d'application et l'orifice à travers lequel est réalisée la mesure de la température de l'aliment se trouve décalé axialement par rapport à l'aliment à chauffer.

Un but de l'invention est un appareil d'application de micro-ondes, à au moins un échantillon, comprenant des moyens de mesure de la température sans pollution de l'environnement de l'appareil par des micro-ondes, ladite température pouvant être mesurée en continu.

Il a maintenant été trouvé, et c'est un objet de la présente invention, un appareil d'application de micro-ondes sur au moins un échantillon placé dans au moins un récipient, ledit appareil comprenant des moyens pour émettre des micro-ondes dans une cavité d'application délimitée par une paroi supérieure, une paroi inférieure et une paroi latérale, la paroi supérieure de ladite cavité d'application présentant au moins une ouverture de dimension telle qu'elle permet l'introduction du récipient dans la cavité d'application, ladite ouverture étant centrée sur l'axe dudit récipient et pourvue d'une cheminée, située à sa périphérie, d'une hauteur H, fonction de la fréquence d'émission des micro-ondes et de la section de passage de l'ouverture pour former une barrière d'absorption s'opposant à la propagation des micro-ondes hors de la cavité d'application, caractérisé en ce qu'il comprend des moyens de mesure de la température constitués par un pyromètre à rayonnements recevant directement les radiations émises par l'échantillon à travers un orifice situé dans la paroi inférieure de la cavité d'application, en dessous du récipient, sensiblement selon l'axe dudit récipient, les dimensions dudit orifice étant telles qu'il constitue lui-même une barrière anti-propagation des micro-ondes hors de la cavité d'application.

Par "pyromètre à rayonnements" on désigne aussi bien un pyromètre recueillant les radiations visibles et invisibles qu'un pyromètre recueillant seulement les radiations visibles.

Dans le présent texte par "directement" on entend que les radiations émises par l'échantillon atteignent le pyromètre à rayonnements sans être conduites par un intermédiaire, tel par exemple qu'un faisceau de fibres optiques. Les radiations cheminent librement dans l'atmosphère baignant le récipient et la cavité d'application entre l'échantillon et le pyromètre à rayonnements, cela, cependant, n'exclut pas que selon un autre mode de réalisation de l'appareil, le pyromètre à rayonnements reçoive les radiations après réflexion sur un miroir.

Selon un autre mode de réalisation, l'appareil est un appareil d'application de micro-ondes simultanément sur une pluralité d'échantillons, chaque échantillon étant placé dans un récipient, l'appareil comprenant des moyens pour émettre des micro-ondes dans une cavité d'application, délimitée par une paroi, les récipients étant répartis dans la cavité d'application selon un cercle d'axe X, la paroi supérieure de la cavité d'application étant conformée de façon telle que au moins la zone comportant les récipients puisse tourner autour de l'axe X, caractérisé en ce qu'il comprend des moyens de mesure de la température tels que précités.

L'appareil, objet de la présente invention est tel que lesdits moyens de mesure de la température sont constitués par un pyromètre à rayonnements recevant directement les radiations émises par l'échantillon à travers un orifice dans la paroi de la cavité d'application des micro-ondes.

Afin que l'orifice, dans la paroi de la cavité d'application, destiné au passage des radiations vers le pyromètre à rayonnements ne constitue pas une source de pollution par les micro-ondes de l'environnement de l'appareil, celui-ci peut être tel que les dimensions de l'orifice dans la paroi de la cavité d'application des micro-ondes sont telles qu'il constitue lui-même une barrière anti-propagation des micro-ondes hors de la cavité d'application.

Selon un autre mode de réalisation, également pour empêcher la sortie des micro-ondes hors de la cavité d'application par l'orifice, à l'orifice dans la paroi de la cavité d'application des micro-ondes est associée une cheminée d'une hauteur h fonction de la fréquence d'émission des micro-ondes et de la section de passage de l'orifice pour former une barrière d'absorption des micro-ondes hors de la cavité d'application.

Selon une variante de réalisation, l'appareil, selon la présente invention, peut comporter un miroir placé de façon telle qu'il reçoive les radiations émises par l'échantillon à travers l'orifice de la paroi et qu'il réflechisse lesdites radiations vers le pyromètre à rayonnements.

L'appareil, objet de la présente invention, est destiné à soumettre un échantillon, contenu dans un récipient, à des micro-ondes afin de le chauffer rapidement, ce chauffage ayant pour but d'effectuer une opération physique ou chimique sur l'échantillon.

L'appareil est ainsi particulièrement destiné à être utilisé pour réaliser des réactions chimiques en milieu humide sur les échantillons.

L'invention sera mieux comprise par la description des figures ci-jointes, qui représentent, à titre d'exemple, schématiquement, sans échelle déterminée, divers modes de réalisation de l'appareil selon l'invention.

La figure 1 est une vue générale externe schématique, avec coupe partielle par un plan vertical d'un mode de réalisation de l'appareil selon l'invention.

La figure 2 est une vue générale externe d'un autre mode de réalisation de l'appareil.

La figure 3 une vue de détail, en coupe par un plan vertical d'un autre mode de réalisation de l'appareil, permettant la mesure de la température, objet de l'invention.

La figure 4 est une vue de détail, en coupe par un plan vertical d'un autre mode de réalisation de l'appareil, permettant la mesure de la température simultanément sur une pluralité d'échantillons, chaque échantillon étant placé dans un récipient.

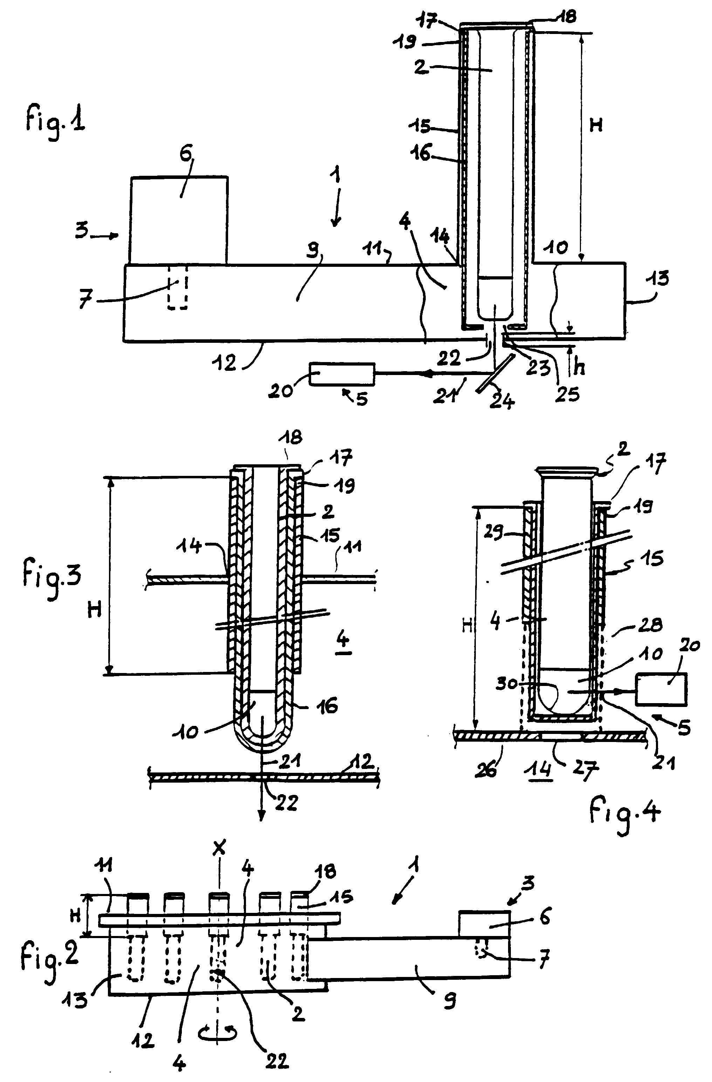

L'appareil d'application de micro-ondes (1) à un échantillon (10) placé dans un récipient (2), selon l'invention, représenté figure 1, comprend des moyens (3) pour émettre des micro-ondes dans une cavité d'application (4) dans laquelle est placé le récipient (2) et des moyens de mesure (5) de la température de l'échantillon (10).

Les moyens (3) pour émettre des micro-ondes sont constitués par un générateur (6) de micro-ondes comportant une antenne (7) émettant dans un guide d'ondes (9) en liaison avec la cavité d'application (4).

Le guide d'ondes (9) est sensiblement parallélépipédique, de section droite rectangulaire, la cavité d'application (4) étant formée par une zone du guide d'ondes (9) située au voisinage de l'extrémité de celui-ci opposée à l'antenne (7). La cavité d'application (4) est donc limitée par la paroi supérieure (11), la paroi inférieure (12) et la paroi latérale (13) du guide d'ondes (9).

Afin d'introduire le récipient (2) dans la cavité d'application (4) la paroi supérieure (11) de celle-ci, présente une ouverture (14) de dimension telle qu'elle permet l'introduction du récipient (2) dans la cavité d'application (4). Le récipient (2) est souvent de section horizontale circulaire et l'ouverture (14) est également circulaire. Selon le mode de réalisation représenté, le récipient (2) est du type éprouvette et porte un bourrelet (18) extérieur à la partie supérieure de son col.

L'ouverture (14) est pourvue d'une cheminée (15), située à sa périphérie, d'une hauteur H, fonction de la fréquence d'émission des micro-ondes et de la section de passage de l'ouverture (14) pour former une barrière d'absorption s'opposant à la propagation des micro-ondes hors de la cavité d'application (4). Tel que réprésenté, figure 1, la cheminée (15) est tubulaire, de forme cylindrique et constituée par une tôle.

Dans la cheminée (15), entre la cheminée (15) et le récipient (2) est placée une gaine (16) réalisée en un matériau perméable aux micro-ondes, la gaine (16) évite la projection, dans la cavité d'application (4), de l'échantillon (10) et de débris du récipient (2) lors de la rupture de celui-ci. La gaine (16) porte à sa partie supérieure un bourrelet (17) externe.

Le bourrelet (17) de la gaine (16) repose sur la surface supérieure (19) de la cheminée (15) et le bourrelet (18) du récipient (2) repose sur le bourrelet (17) de la gaine (16).

Les moyens de mesure (5) de la température de l'échantillon (10) sont constitués, selon l'invention par un pyromètre à rayonnements (20) recevant directement les radiations (21) émises par l'échantillon (10), c'est-à-dire sans que les radiations (21) soient conduites par un intermédiaire, tel qu'un faisceau de fibres optiques, au pyromètre à rayonnements.

Le pyromètre à rayonnements (20) reçoit directement les radiations (21) émises par l'échantillon (10) à travers un orifice (22) dans la paroi inférieure (21) de la cavité d'application (4) des micro-ondes.

Selon le mode de réalisation représenté à l'orifice (22) est associée une cheminée (23) d'une hauteur h fonction de la fréquence d'émission des micro-ondes et de la section de passage de l'orificie (22) pour former, comme pour l'ouverture (14), une barrière d'absorption des micro-ondes hors de la cavité d'application (4).

Egalement, selon le mode de réalisation représenté, les radiations (21) émises par l'échantillon (10) à travers l'orifice (22) sont réfléchies par un miroir (24) vers le pyromètre à rayonnements (20) et la gaine (16) n'étant pas perméable aux radiations (21) émises par l'échantillon (10) est pourvue d'un trou (25) en correspondance avec l'orifice (22).

Ainsi, lors du fonctionnement de l'appareil, la température de l'échantillon (10) contenu dans le récipient (2) est mesurée par le pyromètre à rayonnements (20), celui-ci recevant les radiations (21) émises par l'échantillon (10) qui passent à travers le trou (25) de la gaine (16), l'orifice (22) de la cavité d'application (4) puis sont réfléchies par le miroir (24) vers le pyromètre à rayonnements (20).

La température de l'échantillon (10) peut être mesurée en continu ou en discontinu, elle peut être lue directement par l'opérateur après affichage et/ou enregistrée, le pyromètre à rayonnements (20) étant relié à des moyens d'impression ou d'enregistrement photographique.

L'appareil (1) représenté figure 2 permet d'appliquer des micro-ondes simultanément à une pluralité d'échantillons, chaque échantillon étant placé dans un récipient (2).

L'appareil (1) comprend des moyens (3) pour émettre des micro-ondes constitués par un générateur (6) de micro-ondes comportant une antenne (7) émettant dans un guide d'ondes (9) en liaison avec la cavité d'application (4).

La cavité d'application (4) est selon le présent mode de réalisation, un cylindre de directrice circulaire, d'axe X perpendiculaire à la direction de déplacement des micro-ondes dans le guide d'ondes (9), le guide d'ondes (9) et la cavité d'application (4) admettant le même plan de symétrie.

La cavité d'application (4) est délimitée par une paroi supérieure (11), une paroi inférieure (12) et une paroi latérale (13).

Selon le mode de réalisation représenté la paroi supérieure (11) de la cavité d'application (4) est indépendante de la paroi latérale (13) et peut être animée d'un mouvement de rotation autour de l'axe X. La paroi supérieure (11) de la cavité d'application (4) est alors pourvue à sa périphérie de moyens qui coopèrent avec des moyens portés par le bord supérieur de la paroi latérale (13) pour d'une part, constituer un piège quart d'ondes et d'autre part, faciliter le déplacement relatif de la paroi supérieure (11) par rapport à la paroi latérale (13) en diminuant les forces de frottement.

L'appareil (1) permet d'introduire dans la cavité d'application (4) huit récipients (2), contenant chacun un échantillon. Ces récipients (2) sont introduits dans la cavité d'application (4) par des ouvertures de la paroi supérieure (11) pourvues, comme décrit ci-avant, de cheminées (15) de hauteur H pour former une barrière d'absorption s'opposant à la propagation des micro-ondes hors de la cavité d'application (4), les récipients (2) reposant par l'intermédiaire d'un bourrelet (18) extérieur sur la surface supérieure de la cheminée (15). Les cheminées (15) de hauteur H sont ici en partie situées dans la cavité d'application (4).

Les ouvertures de la paroi supérieure (11) de la cavité d'application (4) sont disposées selon un cercle d'axe X. Les récipients (2), donc les échantillons qu'ils contiennent, sont de ce fait tous soumis à la même quantité de micro-ondes lors de la rotation de la paroi supérieure (11) de l'appareil (1) autour de l'axe X.

Afin q'un pyromètre à rayonnements (non représenté) puisse recevoir les radiations émises par l'échantillon la paroi latérale (13) de la cavité d'application (4) comporte un orifice (22).

Un appareil (1) selon ce mode de réalisation permet cependant une mesure discontinue de la température d'un échantillon, en effet la température étant mesurée à chaque passage de l'échantillon devant l'orifice (22).

Pour effectuer des mesures de température à intervalles de temps plus rapprochés la paroi latérale (13) peut comporter plusieurs orifices (22), à chaque orifice (22) étant associé un pyromètre à rayonnements.

Un appareil d'application de micro-ondes peut aussi être analogue à celui décrit ci-avant mais comporter seulement une zone centrale, présentant les ouvertures destinées à l'introduction des récipients dans la cavité d'application, susceptible d'être animée d'un mouvement de rotation.

Un appareil d'application de micro-ondes permettant d'appliquer des micro-ondes à une pluralité d'échantillons, chaque échantillon étant placé dans un récipient, peut être tel que les récipients et les parois de la cavité d'application soient fixes les uns par rapport aux autres. Afin de mesurer la température des échantillons, la paroi latérale de la cavité d'application sera munie d'une pluralité d'orifices et à chaque orifice sera associé un pyromètre à rayonnements ou bien l'opérateur déplacera un pyromètre à rayonnements pour l'associer successivement à chaque orifice.

Il est bien entendu que la mesure de la température selon le mode de réalisation représenté sur la figure 2 ne fait pas partie de la présente invention.

La figure 3 est une vue de détail en coupe par un plan vertical d'un autre mode de réalisation de l'appareil d'application de micro-ondes selon l'invention.

La cavité d'application (4) est délimitée comme précédemment par une paroi supérieure (11), une paroi inférieure (12) et une paroi latérale (non représentée). La paroi supérieure (11) présente au moins une ouverture (14) pour l'introduction dans la cavité d'application (4) d'un récipient (2). L'ouverture (14) est munie, comme ci-avant, d'une cheminée (15) d'une hauteur H formant barrière d'absorption des micro-ondes, la cheminée (15) est, selon le présent mode de réalisation, en partie située dans la cavité d'application (4).

Dans la cheminée (15) est placée une gaine (16) réalisée en matériau perméable à la fois aux micro-ondes et aux radiations (21) émises par l'échantillon (10).

Comme ci-avant, la gaine (16) repose sur la surface supérieure (19) de la cheminée (15) par un bourrelet (17) et le récipient (2) repose sur la gaine par un bourrelet (18).

Les moyens de mesure de la température de l'échantillon (10) sont constitués par un pyromètre à rayonnements (non représenté) recevant les radiations (21) émises par l'échantillon (10) à travers un orifice (22) situé dans la paroi inférieure (12) de la cavité d'application (4) au droit du récipient (2). L'orifice (22), n'est pas comme l'orifice (22) de l'appareil (1) selon le mode de réalisation représenté figure 1 entouré d'une cheminée de hauteur h. Les dimensions de l'orifice (22) ont ici été calculées pour qu'il constitue lui-même une barrière anti-propagation des micro-ondes.

L'appareil d'application de micro-ondes dont une cheminée (15) est représentée en coupe par un plan vertical figure 4, est tel que les micro-ondes sont émises dans une cavité secondaire (14) dont la paroi supérieure (26) est pourvue d'au moins une fenêtre de couplage (27). Chaque fenêtre de couplage (27) est entourée d'une cheminée (15) située au-dessus de la paroi supérieure (26) de la cavité secondaire (14), la cheminée (15) étant de forme cylindrique.

L'espace intérieur de la cheminée (15) forme une cavité d'application (4) des micro-ondes destinée à recevoir le récipient (2).

La cheminée (15) selon le mode de réalisation représenté est constituée dans sa partie basse (28) par un matériau de structure discontinue, tel qu'une toile métallique, et dans sa partie haute (29) par un matériau de structure continue, tel qu'une tôle. Elle a une hauteur H fonction de la fréquence d'émission des micro-ondes dans la cavité secondaire (14) et de la section de la fenêtre de couplage (27) pour s'opposer à la propagation des micro-ondes hors de la cavité d'application (4).

Dans la cheminée (15) est placée, comme décrit ci-avant, une gaine (16) qui repose par un bourrelet (17) sur le bord supérieur (19) de la cheminée (15). Selon ce mode de réalisation le récipient (2) repose par sa partie inférieure (30) sur le fond de la gaine (16) directement ou après intercalation d'un matériau d'amortissement des chocs.

Selon le présent mode de réalisation la gaine (16) est réalisée en matériau perméable à la fois aux micro-ondes et aux radiations (21) émises par l'échantillon (10).

Les moyens de mesure (5) de la température de l'échantillon (10) sont constitués par un pyromètre à rayonnements (20) recevant directement les radiations (21) émises par l'échantillon (10) à travers les lacunes du matériau de structure discontinue constituant la partie basse (28) de la cheminée (15). Cette caractéristique précitée ne fait pas partie de la présente invention.

Un appareil d'application de micro-ondes comportant, comme décrit ci-avant, une cavité d'application secondaire (14) peut représenter une cheminée (15) réalisée, sur toute sa hauteur H, en un matériau de structure continue. Une telle cheminée comportera alors, dans sa partie située au voisinage de l'échantillon, un orifice destiné au passage des radiations émises par l'échantillon vers le pyromètre à rayonnements.

L'invention n'est pas limitée aux modes de réalisation représentés et décrits ci-avant et l'on peut, sans sortir du cadre de la présente invention combiner entre elles les diverses variantes décrites.

Font également partie de l'invention d'autres variantes ou modes de réalisation à la portée de l'homme de l'art.

Ainsi la cavité d'application des micro-ondes, de l'appareil selon l'invention, a été décrite ci-avant comme un tronçon du guide d'ondes ou comme un cylindre de directrice circulaire, elle peut aussi être formée par un cylindre de directrice non circulaire par exemple polygonale.

Ci-avant les récipients contenant l'échantillon ont été décrits et représentés sous forme d'éprouvette, ils peuvent, bien sûr être remplacés par d'autres récipients, en matériau perméable aux micro-ondes, utilisés habituellement en laboratoire, tels que matras, ampoules .....

De même, les récipients ont été décrits ouverts, ils peuvent être munis à leur partie supérieure de moyens de captage des fumées et vapeurs émises par l'échantillon lors de l'application des micro-ondes ou bien encore être pourvus d'un bouchon assurant une fermeture étanche du récipient, le récipient étant alors constitué de façon telle qu'il puisse supporter une pression interne.

L'appareil d'application de micro-ondes sur au moins un échantillon objet de l'invention, présente de nombreux avantages. En particulier, la mesure de la température de l'échantillon peut être effectuée dans la cavité d'application en continu et cela sans risque de fuite de micro-ondes en dehors de la cavité d'application. De plus, la mesure de la température d'échantillons très corrosifs peut être effectuée sans nécessiter l'utilisation de sonde plongeant dans l'échantillon.

L'appareil d'application de micro-ondes sur au moins un échantillon est particulièrement destiné à être utilisés pour des réactions chimiques en milieu humide.

## Revendications

1. Appareil d'application de micro-ondes (1) sur au moins un échantillon (10) placé dans au moins un récipient (2), ledit appareil (1) comprenant des moyens (3) pour émettre des micro-ondes dans une cavité d'application (4) délimitée par une paroi supérieure (11), une paroi inférieure (12) et une paroi latérale (13), la paroi supérieure (11) de ladite cavité d'application (4) présentant au moins une ouverture (14) de dimension telle qu'elle permet l'introduction du récipient (2) dans la cavité d'application (4), ladite ouverture (14) étant centrée sur l'axe dudit récipient et pourvue d'une cheminée (15), située à sa périphérie, d'une hauteur H, fonction de la fréquence d'émission des micro-ondes et de la section de passage de l'ouverture (14) pour former une barrière d'absorption s'opposant à la propagation des micro-ondes hors de la cavité d'application (4), caractérisé en ce qu'il comprend des moyens de mesure (5) de la température constitués par un pyromètre à rayonnements (20) recevant directement les radiations (21) émises par l'échantillon (10) à travers un orifice (22) situé dans la paroi inférieure (12) de la cavité d'application (4), en dessous du récipient (2), sensiblement selon l'axe dudit récipient (2), les dimensions dudit orifice (22) étant telles qu'il constitue lui-même une barrière anti-propagation des micro-ondes hors de la cavité d'application (4).

2. Appareil selon la revendication 1, caractérisé en ce qu'à l'orifice (22) dans la paroi inférieure (12) de la cavité d'application (4) des micro-ondes est associée une cheminée (23) d'une hauteur h fonction de la fréquence d'émission des micro-ondes et de la section de passage de l'orifice (22) pour former une barrière d'absorption des micro-ondes hors de la cavité d'application (4).

3. Appareil selon l'une quelconque des revendications 1 et 2, caractérisé en ce qu'il comporte un miroir (24) placé de façon telle qu'il reçoive les radiations (21) émises par l'échantillon (10) à travers l'orifice (22) et qu'il réfléchisse lesdites radiations (21) vers le pyromètre à rayonnements.

4. Appareil selon l'une quelconque des revendications 1 à 3, caractérisé en ce que pour appliquer des micro-ondes simultanément sur une pluralité d'échantillons (10), chaque échantillon (10) est placé dans un récipient (2), lesdits récipients (2) sont répartis dans la cavité d'application (4) selon un cercle d'axe X, la paroi supérieure (11) de la cavité d'application (4) étant conformée de façon telle que au moins la zone comportant les récipients (2) puisse tourner autour de l'axe X.

5. Utilisation de l'appareil (1) selon l'une quelconque des revendications 1 à 4 pour réaliser des réactions chimiques en milieu humide.

## Patentansprüche

1. Gerät zur Anwendung von Mikrowellen (1) an mindestens einer in mindestens einen Behälter (2) eingebrachten Probe (10), welches Gerät (1) eine Einrichtung (3) umfaßt, um Mikrowellen in einen Anwendungsraum (4) zu leiten, der begrenzt ist durch eine obere Wand (11), eine untere Wand (12) und eine Seitenwand (13), wobei die obere Wand (11) des genannten Anwendungsraums (4) mindestens eine Öffnung (14) einer solchen Größe aufweist, daß der Behälter (2) in den Anwendungsraum (4) eingeführt werden kann, welche Öffnung (14) konzentrisch zu der Achse des genannten Behälters liegt und mit einem am Rande der Öffnung befindlichen Schacht (15) versehen ist, dessen Höhe H von der Mikrowellenfrequenz und dem Durchtrittsquerschnitt der Öffnung (14) abhängt, so daß eine Absorptionsschranke entsteht, die den Austritt der Mikrowellen aus dem Anwendungsraum (4) verhindert, dadurch gekennzeichnet, daß es eine Temperaturmeßeinrichtung (5) aufweist, bestehend aus einem Strahlungspyrometer (20), das unmittelbar die von der Probe (10) ausgesandte Strahlung auffängt, die durch eine Öffnung (22) hindurchtritt, die in der unteren Wand (12) des Anwendungsraums (4) unterhalb des Behälters (2), im wesentlichen in der Achse des genannten Behälters (2) vorgesehen ist, und daß die Abmessungen der genannten Öffnung (22) so gewählt sind, daß diese ihrerseits eine Schranke gegen den Austritt der Mikrowellen aus dem Anwendungsraum (4) darstellt.

2. Gerät nach Anspruch 1, dadurch gekennzeichnet, daß an der Öffnung (22) in der Wand (12) des Mikrowellen-Anwendungsraums (4) ein Schacht (23) vorgesehen ist, dessen Höhe h von der Mikrowellenfrequenz und dem Durchtrittsquerschnitt der Öffnung (22) abhängt, damit eine Absorptionsschranke für aus dem Anwendungsraum (4) austretende Mikrowellen gebildet ist.

3. Gerät nach Anspruch 1 oder 2, dadurch gekennzeichnet, daß es einen Spiegel (24) umfaßt, der so angeordnet ist, daß er die Strahlung (21) auffängt, die von der Probe (10) durch die Öffnung (22) hindurch ausgesandt wird, und daß er die genannte Strahlung (21) in Richtung auf das Strahlungspyrometer reflektiert.

4. Gerät nach einem der Ansprüche 1 bis 3, dadurch gekennzeichnet, daß, um Mikrowellen gleichzeitig auf eine Mehrzahl Proben (10) zu senden, jede Probe (10) in einen Behälter (2) eingebracht ist, welche Behälter (2) in dem Anwendungsraum (4) auf einer Kreislinie mit der Achse X angeordnet sind, wobei die obere Wand (11) des Anwendungsraums (4) so ausgebildet ist, daß mindestens der die Behälter (2) tragende Bereich um die Achse X drehbar ist.

5. Anwendung des Geräts (1) nach einem der Ansprüche 1 bis 4 zur Durchführung von chemischen Reaktionen in feuchter Umgebung.

## Claims

1. Apparatus (1) for applying microwaves to at least one specimen (10) placed in at least one container (2), the said apparatus (1) comprising means (3) for emitting microwaves into an application cavity (4) bounded by an upper wall (11), a lower wall (12) and a side wall (13), the upper wall (11) of the said application cavity (4) having at least one opening (14) of a size such that it allows introduction of the container (2) into the application cavity (4), the said opening (14) being centred on the axis of the said container and provided with a duct (15), located at its periphery, having a height H which depends on the microwave emission frequency and on the cross-sectional area of the opening (14), in order to form an absorption barrier opposing propagation of the microwaves out of the application cavity (4), characterized in that it comprises means (5) for measuring the temperature, these consisting of a radiation pyrometer (20) which receives directly the radiation (21) emitted by the specimen (10) through an orifice (22) located in the lower wall (12) of the application cavity (4) below the container (2), substantially along the axis of the said container (2), the dimensions of the said orifice (22) being such that it too constitutes a barrier for preventing propagation of the microwaves out of the application cavity (4).

2. Apparatus according to Claim 1, characterized in that associated with the orifice (22) in the lower wall (12) of the microwave application cavity (4) is a duct (23) having a height h which depends on the microwave emission frequency and on the cross-sectional area of the orifice (22), in order to form a barrier for absorption of the microwaves outside the application cavity )4).

3. Apparatus according to either of Claims 1 and 2, characterized in that it includes a mirror (24) placed in such a way that it receives the radiation (21) emitted by the specimen (10) through the orifice (22) and in such a way that it reflects the said radiation (21) onto the radiation pyrometer.

4. Apparatus according to any one of Claims 1 to 3, characterized in that, in order to apply microwaves simultaneously to a plurality of specimens (10), each specimen (10) is placed in a container (2) and the said containers (2) are distributed in the application cavity (4) in a circle of axis X, the upper wall (11) of the application cavity (4) being shaped in such a way that at least the region which includes the containers (2) can rotate about the axis X.

5. Use of the apparatus (1) according to any one of Claims 1 to 4 in order to carry out chemical reactions in a wet medium.
